# EUROPEAN PATENT APPLICATION

(11) **EP 1 705 633 A2**
(43) Date of publication of application: **27.09.2006**
(21) Application number: 05009730.2
(22) Date of filing: 03.05.2005
(51) Int. Cl.: G09G 3/32

(54) **Light emitting device single-cluster lamp control system**

(30) Priority: 24.03.2005 US 87560
(71) Applicant: Ownway Tech Corporation, Chu-Pei City, Hsinchu (TW)
(72) Inventor: Yu, Te-Cheng, Chu-Pei City Hsinchu (TW); Sun Chuang, Shang-Che, Chu-Pei City Hsinchu (TW); Lai, Chih-Wei, Chu-Pei City Hsinchu (TW); Chiu, Huang-Ta, Chu-Pei City Hsinchu (TW); Lin, Wan-Chih, Chu-Pei City Hsinchu (TW); Liao, Hao-Fan, Chu-Pei City Hsinchu (TW); Hsu, Ming-Chu, Chu-Pei City Hsinchu (TW)
(74) Representative: Viering, Jentschura & Partner

(57) **Abstract**

A light emitting device single-cluster lamp control system makes use of a central controller connected with several mutually cascading signal distributors to process already-edited video or multimedia. The central controller then outputs different video data based on the processed video or multimedia, and separately sends the video data via these signal distributors to various light emitting device single-cluster lamp groups to display an image pattern corresponding to the video data. Each light emitting device single-cluster lamp group is installed at a light emitting body (e.g., a building lighting, a landscape lighting, or a billboard) composed of several light emitting device single-cluster lamps.

## Description

### BACKGROUND OF THE INVENTION

### 1. Field of the Invention

The present invention relates to a light emitting device single-cluster lamp control system, which separately sends different video data to various light emitting device single-cluster lamp groups to display an image corresponding to the video data.

### 2. Description of Related Art

The discovery of electricity and the invention of lamps make lighting no longer limited by natural light sources. Along with the development of the electronics industry, lightings based on electricity become more and more diversified. In addition to night lightings, decorative lightings with visual effects like neon lamps, lasers, light emitting diodes (LEDs), and so on have also been developed. The utmost feature of these decorative lighting is that they can form various patterns. Moreover, Neon lamps can be provided around a large building to show the profile of this building with light from these lamps, hence achieving a pretty visual effect. Because neon lamps are designed to be fixed, their replacement will be difficult after they are installed at a building. Therefore, the lighting effect is unalterable. If one wants to make replacement, he needs to disassemble the whole neon lamp, hence taking a lot of trouble. Besides, the power consumption for light emission of a neon lamp is large. This is the primary drawback of neon lamp.

In recent years, manufacturers gradually use power-saving, long-lifetime and variedly-colored LEDs as decorative lamps of building. When an LED is forward biased, electrons and holes therein will recombine to convert electric potential energy into light energy, hence emitting a narrow-bandwidth and nearly monochromatic light. The LED has a low power consumption, a good durability, and a high reliability. LEDs of different colors have been developed. Different color LEDs can be collocated together to produce various kinds of colors. Moreover, the LED can product a high-brightness and stable-chroma light, and its switching speed is faster than the persistence of vision of human eyes. Therefore, LEDs can show continuously varied color images. LEDs have been widely used as display components of large display boards or dynamic image display boards.

Manufacturers usually use a digital light controller DMX512 with several preset color light shows to control a large display board or a dynamic image display board. Although the digital light controller DMX512 has been developed to manipulate, store, integrate, and match light adjusters to establish plentiful and different displaying effects, it can only accomplish a local displaying effect, but cannot simultaneously control decorative LEDs of several buildings to achieve a dynamic displaying effect.

### SUMMARY OF THE INVENTION

An object of the present invention is to provide a light emitting device single-cluster lamp control system, which makes use of a central controller to process already-edited video or multimedia. The central controller outputs different video data based on the processed video or multimedia, and then separately transmits these video data via several signal distributors to various light emitting device single-cluster lamp groups to display an image pattern corresponding to the video data. Each light emitting device single-cluster lamp group is installed at a light emitting body (e.g., a building lighting, a landscape lighting, or a billboard) composed of several light emitting device single-cluster lamps.

The central controller of the present invention comprises a micro processing unit and a data transmission interface. The central processing unit is connected with a memory unit and a media data fetch unit. The data transmission interface is connected to the micro processing unit via a serial bus. The micro processing unit controls the media data fetch unit to get an external media data or a pattern data edited by software, and stores the media data in the memory unit. After the micro processing unit processes these data, video data are outputted via the data transmission interface.

The above central controller is connected with several mutually cascading signal distributors. The video data are transmitted to these signal distributors. The signal distributor comprises a decoding unit and an interface buffer unit. The decoding unit is connected to an address setting unit and to the central controller via a data transmission interface, and is used to receive the video data. The interface buffer unit is connected to the decoding unit and the corresponding light emitting device single-cluster lamp group. The decoding unit decodes the video data based on the address data set by the address setting unit. The decoded video data is transmitted to this light emitting device single-cluster lamp group via the interface buffer unit. The video data is used to adjust the lights of several light emitting device single-cluster lamps in this light emitting device single-cluster lamp group to dynamically show an image pattern corresponding to the video data.

These signal distributors respectively decode video data outputted by the central controller based on address data set by their own address setting units, and respectively transmit the decoded video data via their own interface buffer units to the connected light emitting device single-cluster lamp groups. The present invention makes use of a central controller to separately transmit stored image pattern data to various light emitting device single-cluster lamp groups to display an image pattern or a dynamically varied image pattern corresponding to the video data. Each of the light emitting device single-cluster lamp groups is installed at a light emitting body (e.g., a building lighting, a landscape lighting, or a billboard) composed of several light emitting device single-cluster lamps. Therefore, the present invention can solve the problem in the prior art that a digital light controller DMX512 can only achieve a local displaying effect but cannot simultaneously control decorative LEDs of a light emitting body (e.g., a building lighting, a landscape lighting, or a billboard) composed of several light emitting device single-cluster lamps to achieve a dynamic displaying effect. Moreover, it is not necessary for control staffs to make control every day in the present invention.

### BRIEF DESCRIPTION OF THE DRAWINGS:

The various objects and advantages of the present invention will be more readily understood from the following detailed description when read in conjunction with the appended drawing, in which:
Fig. 1 is an architecture diagram of a light emitting device single-cluster lamp control system of the present invention;
Fig. 2 is a circuit block diagram of a central controller of the present invention;
Fig. 3 is a circuit block diagram of a signal distributor of the present invention;
Fig. 4 is a circuit block diagram of a light emitting device single-cluster lamp according to a first embodiment of the present invention; and
Fig. 5 is a circuit block diagram of a light emitting device single-cluster lamp according to a second embodiment of the present invention.

### DETAILED DESCRIPTION OF THE PREFERRED EMBODIMENTS

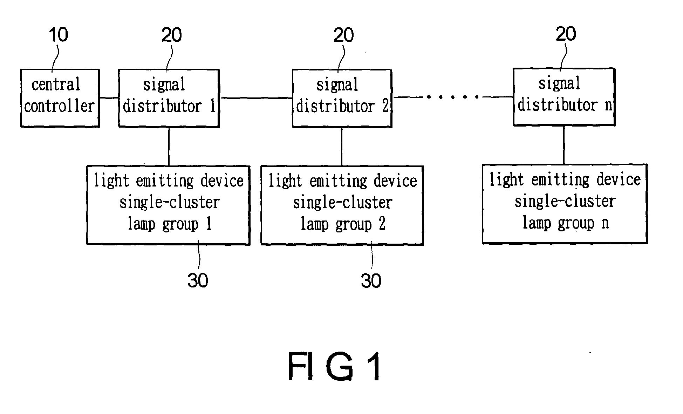

As shown in Fig. 1, a central controller 10 controls one or a plurality of signal distributors 20 to transmit at least a video data outputted by the central controller 10 to various light emitting device single-cluster lamp groups 30 (i.e., display units) Each of the light emitting device single-cluster lamp groups 30 is composed of several light emitting device single-cluster lamps. The present invention is characterized in a multi-object function, i.e., a central controller 10 can control several display units to display a pattern through software editing.

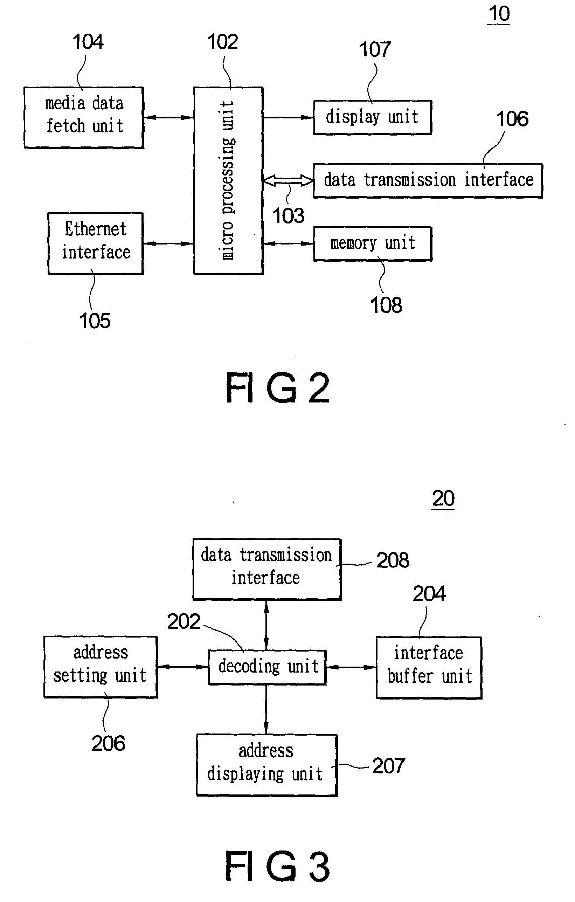

Reference is made to Fig. 2 as well as Fig. 1. The central controller 10 comprises a micro processing unit 102, which is connected with a memory unit 108, a media data fetch unit 104, a display unit 107, and an Ethernet interface 105. The micro processing unit 102 is also connected to a data transmission interface 106 via a serial bus 103.

The micro processing unit 102 controls the media data fetch unit 104 to get an external media data (not shown), and temporarily stores the media data in the memory unit 108. After the micro processing unit 102 processes the media data, video data like image, video, and text are outputted to the signal distributors 20 via the data transmission interface 106. The data transmission interface 106 can be a transmission interface of RS422/485 communication specification, and is used to convert a digital signal to a different signal level to increase the transmission distance. The media data fetch unit 104 is any storage device with IDE interface function like compact flash (CF) card, DVD, CD, and HDD, and is used to store data like pictures, texts, and video edited by a computer.

The Ethernet interface 05 is used for Internet communication, and can provide the functions such as monitoring report and download of new files. The display unit 107 is used for displaying the working status of the system. The serial bus 03 is an IIC serial bus composed of one or more groups of digital signals. The bus speed is adjustable to meet the demand of different numbers of light emitting device single-cluster lamps.

Reference is made to Fig. 3 as well as Fig. 1. The signal distributor 20 comprises a decoding unit 202, which is connected with an address setting unit 206, an interface buffer unit 204, and an address displaying unit 207. The decoding unit 202 is also connected to the central controller 10 via a data transmission interface 208 to receive the video data. The data transmission interface 208 is a differential transmission interface used to provide long-haul data transmission function. The address setting unit 206 is used to set address data of the signal distributor 20. The address setting unit 206 can set address data using switches, IR devices, or other devices.

The address displaying unit 207 is controlled by the decoding unit 202, and displays the address of the signal distributor 20 according to the address data. The address displaying unit 207 can be LEDs or another display device capable of displaying numbers. The decoding unit 202 decodes the video data based on the address data set by the address setting unit 206, and transmits the decoded video data to the corresponding light emitting device single-cluster lamp group 30 via the interface buffer unit 204. The interface buffer unit 204 needs to conform to the interface structure specification of single-cluster lamps in this light emitting device single-cluster lamp group 30, and can be a unidirectional digital signal transmitter or a bidirectional digital signal transceiver. It can unidirectionally transmit signals of IIC serial bus format to light emitting device single-cluster lamps, and can also receive status reports from light emitting device single-cluster lamps.

These signal distributors are connected to the central controller 10 in a mutually cascading way, and respectively receive video data outputted by the central controller 10. The decoding unit 202 in each of the signal distributors 20 decodes the video data based on the address data set by its own address setting unit 206. The decoded video data is correspondingly transmitted to the respectively connected light emitting device single-cluster lamp group 30 to display an image corresponding to the video data. The light emitting device single-cluster lamp group 30 is formed by connecting at least a light emitting device single-cluster lamp.

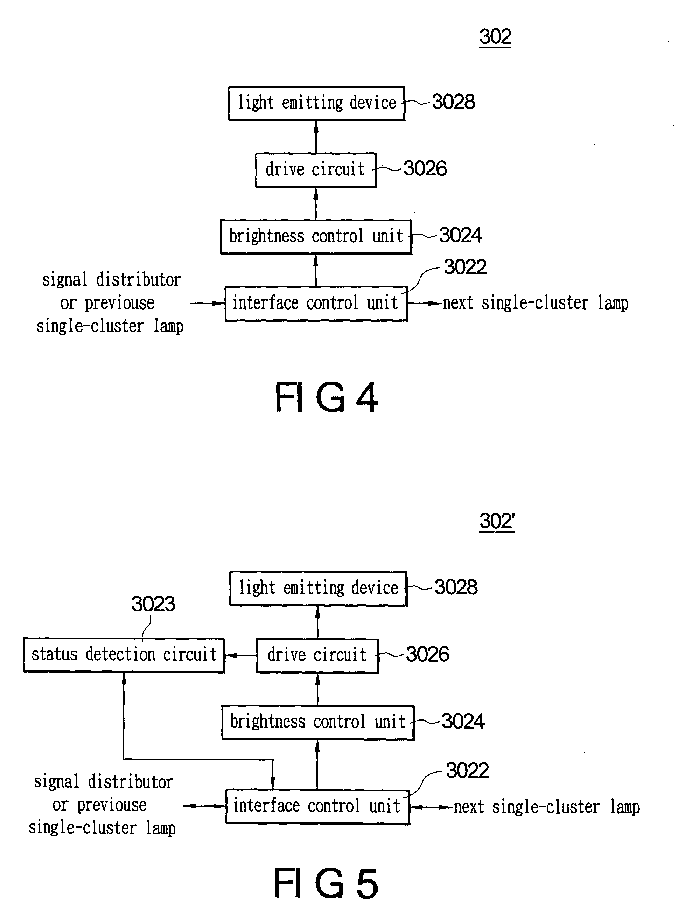

Reference is made to Fig. 4 as well as Fig. 1. A light emitting device single-cluster lamp 302 comprises an interface control unit 3022 connected to the signal distributor 20 or the previous light emitting device single-cluster lamp 302 to get the decoded video data, a brightness control unit 3024 connected to the interface control unit 3022 to convert the decoded video data to a brightness control signal, a drive circuit 3026 connected to the brightness control unit 3024 and a light emitting device 3028. The drive circuit 3026 is controlled by the brightness control signal to drive the light emitting device 3028.

The light emitting device 3028 is formed by series or parallel connecting at least an LED. The brightness control of the brightness control unit 3026 is accomplished by means of pulse width modulation (PWM) or voltage output. The interface control unit 3022, the brightness control unit 3024, and the drive circuit 3026 can be connected together to form a control circuit board.

The light emitting device single-cluster lamp 302 is composed of the control circuit board and a light emitting device 3028 formed by series or parallel connecting at least an LED. The light emitting device single-cluster lamp 302 gets relevant data required by the control circuit board through data from the signal distributor 20 or the previous light emitting device single-cluster lamp 302 based on the interface communication protocol, and converts this data to drive the light emitting device 3028 and adjust its brightness. A single-color level, a double-color level, or a triple-color (full color) level representation can thus be generated. Besides, the control circuit board transfers unnecessary relevant data to the control circuit board of the next light emitting device single-cluster lamp 302 via an internal buffer (not shown) or through actual connection.

The interface control unit 3022 is of IIC serial bus format, and is used to receive an IIC serial bus signal and send this signal to the brightness control unit 3024 with three channel LEDs. The IIC serial bus signal is also sent to the next light emitting device single-cluster lamp. The brightness control unit 3024 with three channel LEDs reads the IIC serial bus signal and converts it to a brightness control signal of LED according to the signal level to control the drive circuit 3026. The brightness control of the LED is accomplished by means of pulse width modulation (PWM) or voltage output. The output current of the drive circuit 3026 is thus controlled to drive the LED and adjust the brightness of the LED.

Reference is made to Fig. 5 as well as Fig. 1. In this embodiment, a light emitting device single-cluster of lamp 302' further comprises a status detection circuit 3023 connected to the drive circuit 3026 and the interface control unit 3022. The status detection circuit 3023 determines the status of the light emitting device 3028 according to a voltage or a current on the drive circuit 3026, and sends this status to the central controller 10 via the interface control unit 3022 and the signal distributor 20.

To sum up, the present invention provides a light emitting device single-cluster lamp control system, which makes use of a central controller to process already-edited video or multimedia. The central controller outputs different video data based on the processed video or multimedia, and then separately transmits these video data via several signal distributors to various light emitting device single-cluster lamp groups to display an image pattern corresponding to the video data. Each of the light emitting device single-cluster lamp groups is installed at a light emitting body (e.g., a building lighting, a landscape lighting, or a billboard) composed of several light emitting device single-cluster lamps. Therefore, the present invention can solve the problem in the prior art that a digital light controller DMX512 can only achieve a local displaying effect but cannot simultaneously control decorative LEDs of several buildings to achieve a dynamic displaying effect. Moreover, it is not necessary for control staffs to make control every day in the present invention.

Although the present invention has been described with reference to the preferred embodiment thereof, it will be understood that the invention is not limited to the details thereof. Various substitutions and modifications have been suggested in the foregoing description, and other will occur to those of ordinary skill in the art. Therefore, all such substitutions and modifications are intended to be embraced within the scope of the invention as defined in the appended claims.

### Reference Numerals

### Present invention

- 10:: central controller

- 102:: micro processing unit
- 103:: serial bus
- 104:: media data fetch unit
- 105:: Ethernet interface
- 106:: data transmission interface
- 107:: display unit
- 108:: memory unit

- 20:: signal distributor

- 202:: decoding unit
- 204:: interface buffer unit
- 206:: address setting unit
- 207:: address displaying unit
- 208:: data transmission interface

- 30:: light emitting device single-cluster lamp group

- 302, 302':: light emitting device single-cluster lamp
- 3022:: interface control unit
- 3023:: status detection circuit
- 3024:: brightness control unit
- 3026:: drive circuit
- 3028:: light emitting device

## Claims

1. A light emitting device single-cluster lamp control system comprising:
a central controller for outputting at least a video data;
at least a signal distributor connected with said central controller in a mutually cascading way and used to receive and then decode said video data for output; and
at least a light emitting device single-cluster lamp group correspondingly connected with said signal distributors, said light emitting device single-cluster lamp group being separately controlled by said decoded video data to display an image corresponding to said video data.

2. The light emitting device single-cluster lamp control system as claimed in claim 1, wherein said central controller comprises:
a micro processing unit;
a data transmission interface connected to said micro processing unit and
said signal distributors via a serial bus;
a memory unit connected to said micro processing unit; and
a media data fetch unit connected to said micro processing unit;
whereby said micro processing unit controls said media data fetch unit to get an external media data and store said media data in said memory unit, and
then outputs said video data to said signal distributors via said data transmission interface after said media data are processed.

3. The light emitting device single-cluster lamp control system as claimed in claim 2 further comprising a display unit, wherein said display unit is connected to said micro processing unit and used for displaying the system status.

4. The light emitting device single-cluster lamp control system as claimed in claim 2 further comprising an Ethernet interface, wherein said Ethernet interface is connected to said micro processing unit and used for system communication.

5. The light emitting device single-cluster lamp control system as claimed in claim 1, wherein said signal distributor comprises:
a decoding unit connected to said micro processing unit via a data transmission interface and used to receive said video data;
an address setting unit connected to said decoding unit and used for setting address data of said signal distributor; and
an interface buffer unit connected to said decoding unit and said light
emitting device single-cluster lamp group;
whereby said decoding unit decodes said video data based on the address data set by said address setting unit, and said decoded video data is transmitted to said corresponding light emitting device single-cluster lamp group via said interface buffer unit.

6. The light emitting device single-cluster lamp control system as claimed in claim 5 further comprising an address displaying unit, wherein said address displaying unit is connected to said decoding unit and used for displaying an address of said signal distributor.

7. The light emitting device single-cluster lamp control system as claimed in claim 1, wherein said light emitting device single-cluster lamp group is formed by connecting at least a light emitting device single-cluster lamp.

8. The light emitting device single-cluster lamp control system as claimed in claim 7, wherein said light emitting device single-cluster lamp comprises:
an interface control unit connected to said signal distributor or a previous
light emitting device single-cluster lamp and used to get said decoded video data;
a brightness control unit connected to said interface control unit and used to convert said decoded video data to a brightness control signal for output; and
a drive circuit connected to said brightness control unit and a light emitting device and controlled by said brightness control signal to drive said light emitting device.

9. The light emitting device single-cluster lamp control system as claimed in claim 8, wherein said light emitting device is formed by series or parallel connecting at least an LED.

10. The light emitting device single-cluster lamp control system as claimed in claim 8, wherein the brightness control of said brightness control unit is accomplished by means of pulse width modulation.

11. The light emitting device single-cluster lamp control system as claimed in claim 8, wherein the brightness control of said brightness control unit is accomplished by means of voltage output.

12. The light emitting device single-cluster lamp control system as claimed in claim 8 further comprising a status detection unit, wherein said status detection unit is connected to said drive circuit and said interface control unit, a status of said light emitting device is determined based on a voltage or a current on said drive circuit, and said status is sent back to said central controller via said interface control unit and said signal distributor.
